(19) **Europäisches Patentamt**

**European Patent Office**

**Office européen des brevets**

(11) **EP 1 499 022 B1**

(12) **FASCICULE DE BREVET EUROPEEN**

(45) Date de publication et mention
de la délivrance du brevet:
**09.08.2006 Bulletin 2006/32**

(51) Int Cl.:
*H03K 3/84* (2006.01)     *G06F 7/58* (2006.01)
*H03B 29/00* (2006.01)

(21) Numéro de dépôt: **04102975.2**

(22) Date de dépôt: **25.06.2004**

(54) **Procédé et dispositif de génération de nombres aléatoires fondés sur des oxcillateurs chaotiques**

Verfahren und Vorrichtung zum Erzeugen von Zufallszahlen auf Basis von chaotischen Oszillatoren

Method and device for the generation of random numbers based on chaotic oscillators

(84) Etats contractants désignés:
**AT BE BG CH CY CZ DE DK EE ES FI FR GB GR HU IE IT LI LU MC NL PL PT RO SE SI SK TR**

(30) Priorité: **04.07.2003 FR 0308218**

(43) Date de publication de la demande:
**19.01.2005 Bulletin 2005/03**

(73) Titulaire: **Thales**
**92200 Neuilly Sur Seine (FR)**

(72) Inventeur: **Chenavas, Marc**
**THALES Intellectual Property**
**94117 CX Arcueil (FR)**

(74) Mandataire: **Dudouit, Isabelle**
**Marks & Clerk France**
**31-33 Avenue Aristide Briand**
**94117 Arcueil Cedex (FR)**

(56) Documents cités:
**EP-A- 0 365 930**     **EP-A- 0 616 429**
**WO-A-01/48594**     **US-A- 3 742 381**
**US-A- 4 611 183**     **US-A- 6 065 029**
**US-A1- 2003 081 775**

## Description

L'invention concerne notamment une source et un dispositif de génération de nombres aléatoires.

Elle concerne aussi la production de nombres aléatoires dans des circuits intégrés de type FPGA ou ASIC.

Elle s'applique par exemple dans des générateurs de nombres aléatoires en technologie numérique.

Les générateurs de nombres aléatoires sont particulièrement utilisés dans le domaine de la cryptologie. L'emploi correct de primitives cryptographiques nécessite un apport d'aléa non reproductible, non prédictible, et ayant de bonnes propriétés statistiques.

Un générateur de nombres aléatoires est un dispositif basé sur la mesure de quantités physiques non reproductibles pour produire des nombres aléatoires. Il existe à ce jour deux familles de générateurs de nombres aléatoires :

- ceux basés sur la mesure d'une quantité extérieure (naturelle), imprédictible a priori (fluctuations de température ambiante, de niveau sonore, ou de pression atmosphérique, trajectoire de la souris sur l'ordinateur, temps de frappe au clavier, ...),
- ceux dont le fonctionnement est indépendant des conditions extérieures d'utilisation (mesure en milieu isolé du bruit thermique d'une résistance, ou des radiations émises par un corps radioactif..).

La première famille offre l'inconvénient d'être moins sûre au niveau de l'aléa produit, bien que ce dernier puisse être de bonne qualité. En effet, il est facile de couper la source extérieure, ou même de la moduler selon un schéma prédéterminé. La seconde famille permet de sécuriser la production d'aléa.

Le brevet US 5 506 795 divulgue un dispositif et un procédé permettant de produire des signaux de manière chaotique. Pour cela, plusieurs éléments de retard sont connectés en série. Un des éléments est relié à une fonction non linéaire alors que les autres éléments sont reliés à un multiplicateur. Les signaux générés sont additionnés pour produire le signal émis.

La présente invention concerne notamment l'utilisation de sources aléatoires binaires à base d'oscillateurs dynamiques ou oscillateurs chaotiques.

L'invention concerne une source physique permettant de générer des variables aléatoires. Elle est caractérisée en ce qu'elle comporte des blocs ayant au moins un ou plusieurs éléments de retard non rythmés par une horloge une fonction booléenne de rebouclage qui est une fonction strictement affine avec un nombre impair d'entrées et en ce que le premier élément de retard de chaque bloc est relié une des entrées de la fonction affine de rebouclage.

La fonction booléenne est par exemple une fonction strictement affine avec un nombre impair d'entrées.

Les éléments de retard peuvent être des « ET » logiques.

Elle peut comporter un filtre passe-bas numérique disposé avant le premier élément de retard.

Le filtre comporte par exemple un mux piloté par un détecteur de changement d'état du signal, ce filtre étant placé entre la sortie de la fonction de rebouclage et l'entrée de la ligne à retard.

Le détecteur de changement d'état du signal comporte un « XOR ».

La première entrée du « XOR » reçoit par exemple le signal issu de la sortie du mux, et la deuxième entrée du « XOR » peut recevoir ce même signal retardé par la ligne de retard, la sortie du « XOR » pilotant le mux.

L'invention concerne aussi une source aléatoire binaire comportant au moins une source physique présentant une ou plusieurs des caractéristiques précitées et au moins un échantillonneur numérique de la variable réelle produite par la source physique.

L'échantillonneur comporte par exemple trois bascules D, un inverseur et un « OU » exclusif.

L'objet de la présente invention présente notamment les avantages suivants :

- Les oscillateurs chaotiques selon l'invention présentent un signal qui se rapproche le plus possible d'un signal de bruit blanc qui est considéré comme le plus aléatoire des signaux. Les oscillateurs chaotiques présentent une forte dépendance aux conditions initiales et donc une forte sensibilité au bruit électronique interne du circuit intégré dans lequel ils sont placés. La non reproductibilité de la suite binaire produite est favorisée, ainsi que l'absence de couplage des oscillations propres de ces oscillateurs avec la fréquence d'horloge de l'échantillonnage.
- Lors de l'échantillonnage, les bascules D agissent comme des instruments de mesure qui renvoient à chaque coup d'horloge une valeur binaire d'autant plus aléatoire que le signal de sortie des bascules est métastable, ce qui rajoute de l'indétermination et donc de l'aléa.
- Le signal d'entrée des bascules D asynchrone contribue à ce que le signal de sortie des bascules soit métastable.
- La place utilisée par les oscillateurs chaotiques à l'intérieur des composants est réduite.
- Les oscillateurs dynamiques peuvent être démarrés ou arrêtés selon la demande et de fait les composants consomment peu d'énergie.
- Les sources aléatoires binaires fournissent de l'aléa à un débit relativement élevé, et en tout cas suffisant pour les applications cryptographiques.

D'autres caractéristiques et avantages de l'invention apparaîtront mieux à la lecture d'un exemple donné à titre illustratif et nullement limitatif annexé des figures qui représentent :

- La figure 1 un schéma de fonctionnement synchrone d'un circuit numérique,
- La figure 2 un exemple de structure d'un oscillateur dynamique,
- La figure 3 le signal issu de l'oscillateur de la figure 4,
- La figure 4 un exemple de la figure 2 avec un rebouclage affine,
- La figure 5 un oscillateur à rebouclage affine filtré,
- La figure 6 une architecture de filtre passe-bas numérique
- La figure 7 une source binaire comprenant un oscillateur tel que décrit à la figure 2,
- Les figures 8, 9 et 10 trois types d'échantillonneurs,
- La figure 11 une structure d'une source binaire à deux oscillateurs identiques,
- Les figures 12 et 13 deux structures de source binaire,

Afin de mieux faire comprendre le principe mis en oeuvre dans l'objet de la présente invention, l'exemple qui suit donné à titre illustratif et nullement limitatif, concerne une source aléatoire binaire comportant un ou plusieurs oscillateurs dynamiques sensibles au bruit électronique de fonctionnement du circuit dans lequel ils sont placés. La variable dynamique de chaque oscillateur est échantillonnée à intervalle de temps régulier pour produire des valeurs binaires non prévisibles et non reproductibles.

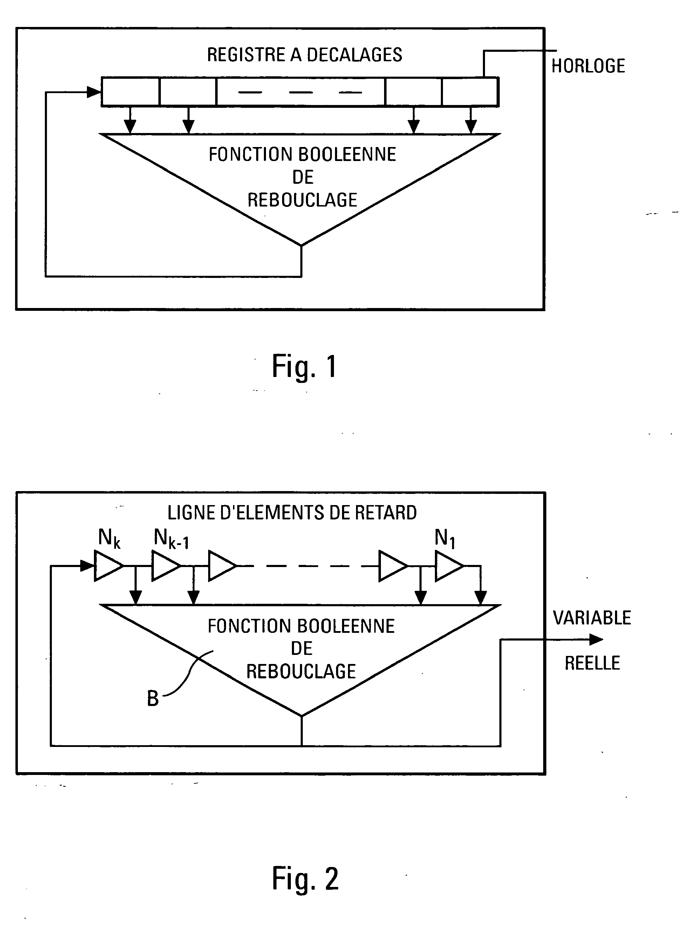

La figure 1 rappelle le fonctionnement synchrone d'un circuit numérique. Un circuit numérique est constitué d'éléments capables d'effectuer des calculs logiques sur des valeurs binaires (par exemple des 'OU', des 'ET', des 'NON' logiques). Ces valeurs binaires sont représentées dans le circuit numérique par des signaux électriques constants, symbolisant à l'intérieur du circuit les états binaires 0 ou 1. Cette stabilisation est assurée par ce que l'on appelle une bascule, qui est une association particulière d'éléments logiques. Pour assurer le bon fonctionnement du calcul logique, il est nécessaire de synchroniser l'ensemble des constituants du circuit. Ceci est le rôle de l'horloge. C'est cette dernière qui rythme l'évolution du système. De fait, chaque bascule est capable de mémoriser à chaque cycle de l'horloge une valeur binaire. Cette dernière est alors utilisable durant ce cycle pour le calcul logique. Un tel dispositif ne permet pas de générer d'aléa.

La figure 2 représente un exemple de structure d'un oscillateur dynamique selon l'invention. Il comporte une ligne de retard comprenant un ou plusieurs éléments de retard Ni et une fonction de rebouclage B sans points fixes.

Cette ligne de retard est par exemple découpée en k blocs de Ni éléments de retard, pour i compris entre 1 et k. Les paramètres de l'oscillateur peuvent être adaptés afin que l'oscillation produite ait un comportement chaotique.

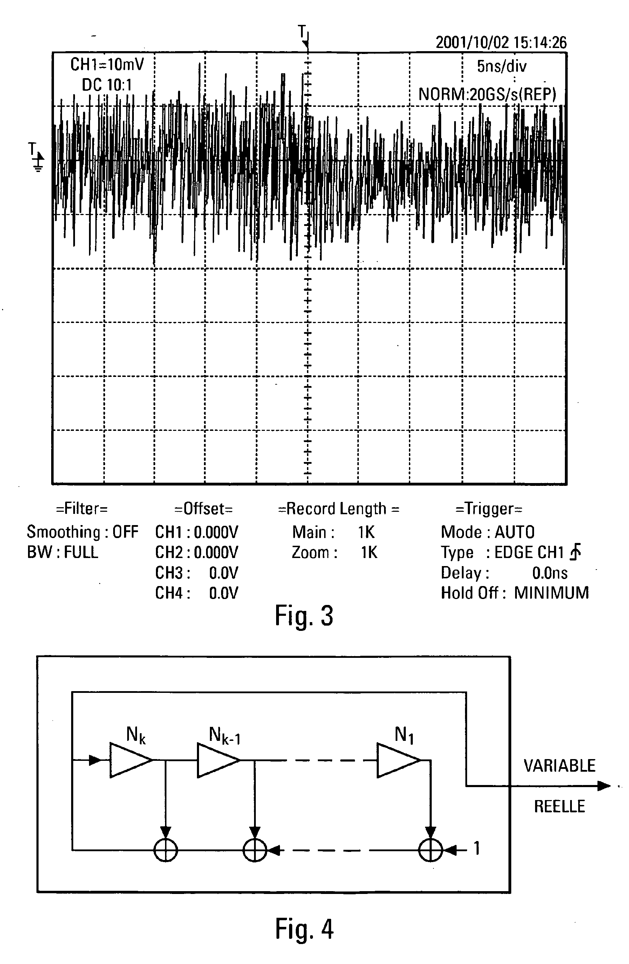

La figure 3 représente le datagramme obtenu en visualisant sur un oscilloscope l'évolution de la tension d'un oscillateur asynchrone selon la présente invention.

La figure 4 représente un exemple particulier où la fonction de rebouclage est une fonction affine.

Le premier élément de retard de chaque bloc est relié à une des entrées de la fonction affine de rebouclage. La fonction de rebouclage affine doit vérifier la condition d'absence de points fixes décrite ci-après.

Pour $N = N_1+N_2+N_3+.....+N_k$, l'expression générale d'une fonction booléenne affine est :

$$f(e_1,e_2,...e_N) = c_0 \oplus c_1 e_1 \oplus ... \oplus c_N e_N \quad (1)$$

où les ci pour i=0,...,N, sont des coefficients binaires fixés, déterminant de manière unique la fonction affine f.

Les fonctions linéaires sont un cas particulier de fonctions affines, obtenues en fixant à 0 le paramètre $c_0$ de leur expression. la fonction f est strictement affine si le paramètre $c_0$ de son expression vaut 1.

Les deux points $\underline{0}=(0,...,0)$ et $\underline{1}= (1,...,1)$ sont les seuls points fixes possibles d'un registre à décalages. Pour que le premier ne soit pas un point fixe, la fonction de rebouclage doit être strictement affine, c'est-à-dire que $c_0 =1$. Pour que le second ne soit pas un point fixe, la valeur de la fonction en ce point doit être 0. Ceci est vrai dès que le nombre d'indices supérieurs à 1, tels que $c_i =1$, soit impair. Dans ce cas, la somme modulo 2 d'un nombre impair de 1 vaut 1. Ce résultat additionné à $c_0=1$ vaut alors 0.

La fonction avec sa condition d'absence de points fixes peut s'exprimer sous la forme suivante :

$$f(e_1,e_2,...e_N) = 1 \oplus e_1 \oplus e_{N_1+1} \oplus ... \oplus e_{N_1+...+N_{k-2}+1} \oplus e_{N_1+...+N_{k-1}+1} \text{ et k impair} \quad (2)$$

Cette structure d'oscillateur est particulièrement simple, tout en permettant de s'affranchir des états stables.

Selon un mode de réalisation, la source physique ou oscillateur dynamique comporte un filtre F destiné à diminuer le temps de réponse du signal chaotique pour le faire coïncider avec le temps de réponse des éléments de retard. Ceci permet notamment de s'affranchir des problèmes de dénaturation du signal lorsque ce dernier traverse les éléments de retard.

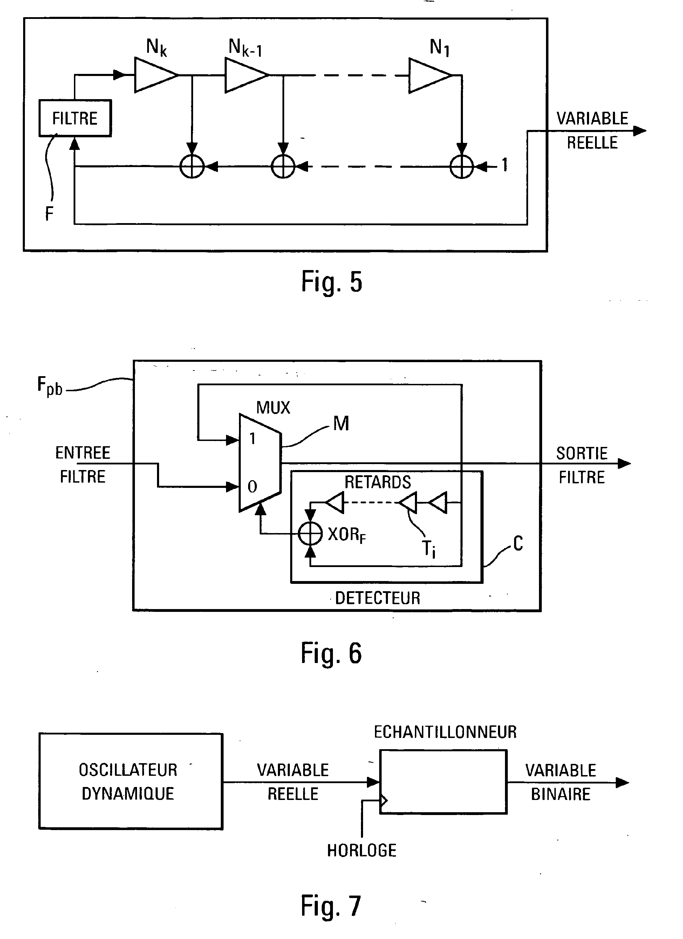

Le filtre est placé dans chaque oscillateur dynamique entre la sortie de la fonction de rebouclage et l'entrée de la ligne d'éléments de retard, comme il est représenté à la figure 5. Le signal échantillonné est le signal présent à la sortie de la fonction de rebouclage, juste avant l'entrée du filtre.

La figure 6 schématise un exemple d'architecture d'un filtre passe-bas numérique Fpb. Il est constitué d'un mux M (multiplexeur avec deux entrées binaires et une sortie) commandé par un détecteur C de changement d'état du signal. Le détecteur de changement d'état du signal est constitué d'un « XOR » référencé $XOR_F$ et d'une ligne d'éléments de retard Ti.

Le principe du filtre passe-bas numérique est le suivant :

- Le $XOR_F$ détecte un changement entre le signal issu du mux et ce même signal retardé par la ligne d'éléments de retard, et pilote le mux en conséquence.
- Si deux signaux sont égaux, le mux laisse passer le signal présent sur son entrée 0, c'est-à-dire le signal présent à l'entrée du filtre.
- Si ces deux signaux sont différents, le mux laisse passer le signal présent

sur son entrée 1, c'est-à-dire le signal présent à la sortie du mux.

Par conséquent :

- Tant qu'aucun changement du signal d'entrée du filtre n'intervient, le signal présent à la sortie du filtre est le signal présent à son entrée.
- Si un changement de valeur du signal intervient sur l'entrée du filtre, ce changement est propagé à la sortie du filtre, à l'entrée 1 du mux, ainsi qu'au détecteur de changement d'état du signal.
- Le signal présent à la sortie du filtre est alors stabilisé à sa nouvelle valeur sur une durée correspondant au temps de retard de la ligne d'éléments de retard du détecteur de changement d'état du signal, après quoi le détecteur repositionne le mux à 0 pour laisser à nouveau passer le signal présent à l'entrée du filtre.

L'utilisation d'un tel filtre est utile pour les composants ayant un temps de réponse très court.

Le nombre d'éléments de retard à utiliser pour la ligne de retard du filtre est variable et dépend du composant utilisé. Ce nombre est choisi suffisamment grand de façon à ce que le signal soit sensiblement conservé lorsqu'il traverse la ligne d'éléments de retard de l'oscillateur. Il est aussi choisi de manière à ce que le filtre ne dénature pas le caractère chaotique du signal oscillant et transforme l'oscillateur en un simple registre à décalages asynchrone, ayant pour effet de dénaturer le caractère aléatoire de l'échantillonnage.

La figure 7 schématise la structure d'une source binaire comprend un oscillateur dynamique tel que décrit dans les figures 2 à 6 et un échantillonneur. L'échantillonneur a notamment pour fonction de transformer, à chaque coup d'horloge, la valeur réelle de la variable dynamique d'un oscillateur, en une valeur binaire. L'échantillonneur est constitué d'éléments logiques synchronisés par l'horloge.

Dans les exemples donnés en relation avec la présente invention, les échantillonneurs consistent en un assemblage de bascules D, et la variable échantillonnée est le signal de l'oscillateur pris à la sortie de la fonction de rebouclage, c'est-à-dire le signal qui est réinjecté dans la ligne d'éléments de retard (cf figure 4).

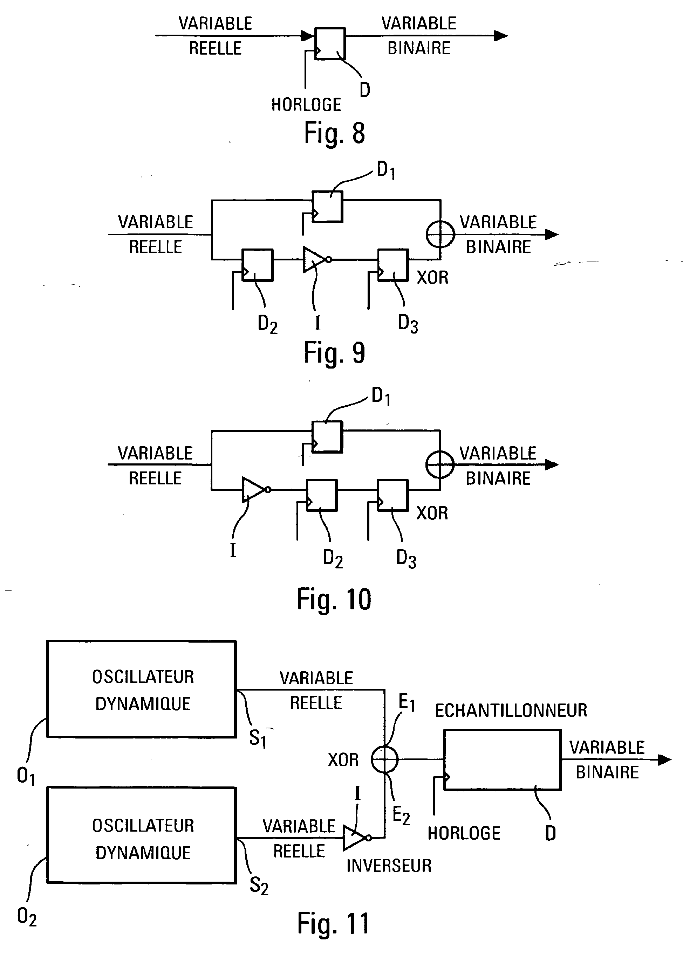

La figure 8 schématise un premier exemple d'échantillonneur constitué d'une bascule D. La variable dynamique réelle générée par l'oscillateur dynamique est échantillonnée par la bascule D. La sortie de cette bascule peut encore présenter des états métastables, qui seront résolus dès la bascule suivante.

Le fonctionnement habituel d'une bascule est le suivant : à chaque coup d'horloge H, la bascule mémorise la valeur binaire présente sur son entrée, tout en offrant sur sa sortie la valeur binaire mémorisée au coup d'horloge précédent. Cette valeur binaire est une variable réelle. A chaque coup d'horloge, la bascule déduit de cette variable réelle une valeur binaire et la mémorise. Dans ce mode de fonctionnement, la bascule agit comme un instrument de mesure.

Selon ce premier mode de réalisation, les propriétés statistiques de la source sont indépendantes des variations de la fréquence de fonctionnement du circuit, ainsi que des variations de la température ambiante du milieu dans lequel fonctionne le circuit. Le biais à l'équidistribution dépend linéairement de la tension d'alimentation du circuit.

Les figures 9 et 10 représentent deux autres modes de réalisation d'échantillonneurs.

L'échantillonneur comporte trois bascules $D_1$, $D_2$, $D_3$, un inverseur I et un ou exclusif « XOR ». Sur la figure 9, l'inverseur I est disposé entre deux bascules $D_2$, $D_3$. Sur la figure 10 l'inverseur I est disposé avant les deux bascules $D_2$, $D_3$. Ce mode de réalisation présente l'avantage d'être insensible aux variations des conditions extérieures de fonctionnement.

La sortie de tels échantillonneurs peut présenter des états métastables qui sont résolus dès la bascule suivante.

Les figures 11 à 13 schématisent des structures de source binaire aléatoire comportant deux oscillateurs dynamiques. Ces structures présentent comme avantage de fournir des sources binaires insensibles aux variations de conditions extérieures de fonctionnement.

Sur la figure 11, la source binaire est composée de deux oscillateurs dynamiques identiques $O_1$, $O_2$. La sortie $S_1$ de l'oscillateur $O_1$ est connectée à une première entrée $E_1$ d'un « XOR » et la sortie $S_2$ du deuxième oscillateur $O_2$ passe à travers un inverseur I avant d'être connectée à une autre entrée $E_1$ du « XOR ». La sortie du « XOR » est ensuite échantillonnée par une bascule D. La sortie de cette bascule peut encore présenter des états métastables qui seront résolus dans une bascule suivante.

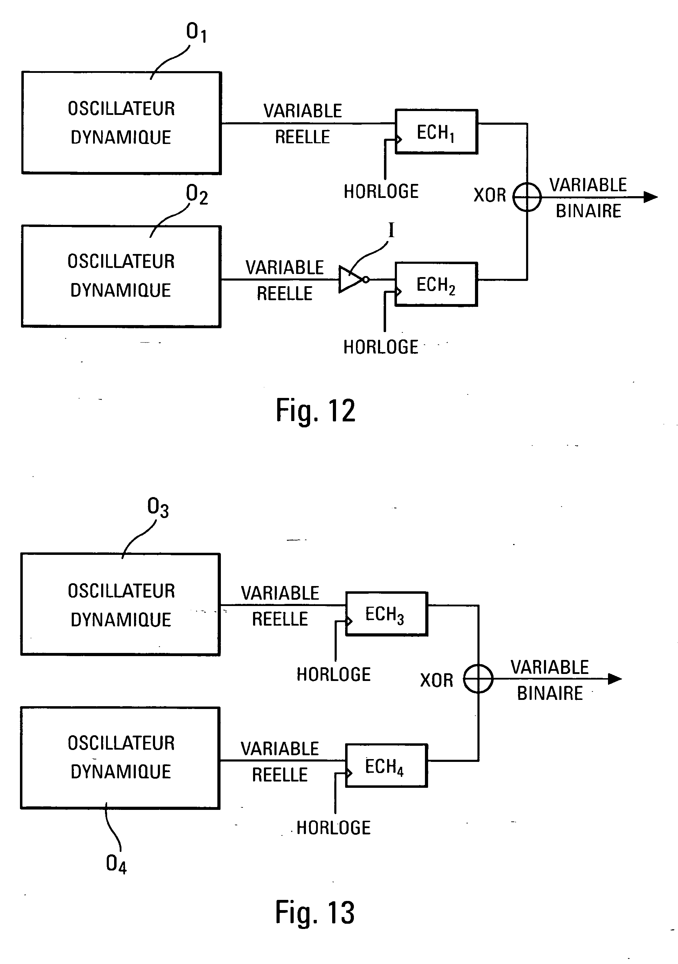

La figure 12 représente une source binaire comprenant deux oscillateurs dynamiques identiques $O_1$, $O_2$. La sortie $S_1$ d'un des oscillateurs $O_1$ est échantillonnée par un échantillonneur du type de celui de la figure 10. La sortie $S_2$ de l'autre oscillateur $O_2$ passe à travers un inverseur I avant d'être échantillonnée par un échantillonneur du type de celui de la figure 10. Les sorties des deux échantillonneurs $ECH_1$, $ECH_2$ sont connectées à deux entrées d'un « XOR ».

La source binaire décrite à la figure 13 est constituée de deux oscillateurs différents $O_3$, $O_4$. La sortie de chaque oscillateur est échantillonnée par un échantillonneur $ECH_3$, $ECH_4$ du type de celui de la figure 10. Les sorties de ces deux échantillonneurs sont connectés aux entrées d'un « XOR ».

La sortie du « XOR » dans les structures des figures 12 et 13 peut présenter des états métastables qui seront résolus dès la bascule suivante.

Les différents modes de réalisation présentés ci-dessus peuvent être implémentés sur les deux types de composants suivants, ces exemples étant donnés à titre illustratif et non limitatif :

Le premier est un Altera FLEX EPF10K10LC84-4 commercialisé par la société Altera. Dans ce premier composant, les éléments de retard des oscillateurs dynamiques présents dans les sources binaires sont des portes élémentaires définies comme étant vides. Ceci permet de retarder le signal qui traverse la porte. Le signal de la figure 3 correspond au datagramme obtenu en visualisant sur un oscilloscope la tension évoluant à l'intérieur d'un oscillateur chaotique implanté dans l'ALTERA. Le signal observé est pris à la sortie de la fonction de rebouclage. L'échantillonnage est effectué à la fréquence de 10 MHz, ce qui permet d'obtenir à la sortie de la source binaire une suite de bits à un taux de 10 Mbits/s. Le temps de réponse d'un oscillateur présent dans ce composant est peu élevé devant le temps de réponse des éléments de retard. Ceci permet au signal chaotique de traverser la ligne d'éléments de retard sans être dénaturé.

Le second est un ACTEL PROASIC A500K050 PQFP208. Dans ce composant les éléments de retard des oscillateurs dynamiques présents dans les sources binaires sont des portes « ET » dont une des entrées constitue l'entrée de l'élément de retard, et dont la sortie constitue la sortie de l'élément de retard. L'autre entrée de la porte « ET » est positionnée à 1 durant toute la durée de l'oscillation chaotique et peut même, si on le désire, servir d'interrupteur de mise en route de l'oscillation chaotique. Ce type d'élément est suffisant pour retarder le signal qui traverse la porte. Le filtre décrit à la figure 6 permet notamment de compenser le temps de réponse d'un oscillateur présent dans ce composant.

La structure de la source aléatoire binaire est modulaire, c'est-à-dire que l'on peut assembler plusieurs oscillateurs identiques ou différents avec plusieurs échantillonneurs pour obtenir une nouvelle structure de source aléatoire binaire.

Les sources aléatoires binaires selon la présente invention peuvent se présenter sous la forme d'une suite d'instructions en langage VHDL, qui code les oscillateurs chaotiques et les échantillonneurs constituant lesdites sources. Ces sources aléatoires binaires sont donc directement utilisables par les constructeurs de circuits pour créer des générateurs de nombres aléatoires, et ce en insérant le code VHDL des sources binaires directement dans le code VHDL de leur circuit. Ceci permet en outre une relative portabilité d'un composant à un autre, bien qu'il faille s'assurer qu'il ne subsiste pas de problèmes liés à la techno-dépendance ou à la compilo-dépendance.

Les sources aléatoires décrites ci-dessus sont facilement implémentables dans des composants cryptographiques dédiés, dans lesquels tout le matériel cryptographique est présent : générateur d'aléa, de pseudo-aléa, algorithme de chiffrement, etc..

## Revendications

**1.** Source physique permettant de générer des variables aléatoires, **caractérisée en ce qu'**elle comporte des blocs ayant au moins un ou plusieurs éléments de retard ($N_1$, $N_2$,...$N_k$) non rythmés par une horloge, une fonction booléenne de rebouclage qui est une fonction strictement affine avec un nombre impair d'entrées et **en ce que** le premier élément de retard de chaque bloc est relié à une des entrées de la fonction affine de rebouclage.

**2.** Source physique selon la revendication 1 **caractérisée en ce que** les éléments de retard sont des « ET » logiques.

**3.** Source physique selon l'une des revendications 1 à 2 **caractérisée en ce qu'**elle comporte au moins un filtre (F) disposé avant les éléments de retard (Ni).

**4.** Source physique selon la revendication 3 **caractérisée en ce qu'**elle comporte un filtre passe-bas numérique (Fpb) disposé avant le premier élément de retard, le filtre comportant un mux (M) piloté par un détecteur (C) de changement d'état du signal, ce filtre étant placé entre la sortie de la fonction de rebouclage et l'entrée de la ligne à retard.

**5.** Source physique selon la revendication 4 **caractérisée en ce que** le détecteur de changement d'état du signal comporte un « XOR ».

**6.** Source physique selon la revendication 5 **caractérisée en ce que** la première entrée du « XOR » reçoit le signal issu de la sortie du mux, et que la deuxième entrée du « XOR » reçoit ce même signal retardé par la ligne de retard, la sortie du « XOR » pilotant le mux.

**7.** Source aléatoire binaire **caractérisée en ce qu'**elle comporte au moins une source physique selon l'une des revendications 1 à 6 et au moins un échantillonneur numérique de la variable réelle produite par la source physique.

**8.** Source aléatoire binaire selon la revendication 7 **caractérisée en ce que** un échantillonneur comporte trois bascules D, un inverseur et un « OU » exclusif.

**9.** Source aléatoire binaire selon la revendication 7 **caractérisée en ce qu'**elle comporte deux sources physiques identiques.

**10.** Source aléatoire binaire selon la revendication 7 **caractérisée en ce qu'**elle comporte deux sources physiques différentes.


**Claims**

**1.** Physical source enabling the generation of random variables, **characterized in that** the source comprises blocks having at least one or more delay elements ($N_1$, $N_2$, ...$N_k$) not regulated by a clock, a Boolean loopback function which is a strictly affine function with an odd number of inputs and **in that** the first delay element of each block is linked to one of the inputs of the affine loopback function.

**2.** Physical source according to Claim 1 **characterized in that** the delay elements are logic AND elements.

**3.** Physical source according to one of Claims 1 to 2 **characterized in that** it comprises at least one filter (F) placed before the delay elements (Ni).

**4.** Physical source according to Claim 3 **characterized in that** it comprises a digital lowpass filter (Fpb) placed before the first delay element, the filter comprising a mux (M) controlled by a detector (C) of a change in state of the signal, this filter being placed between the output of the loopback function and the input of the delay line.

**5.** Physical source according to Claim 4 **characterized in that** the detector of a change in state of the signal comprises an XOR element.

**6.** Physical source according to Claim 5 **characterized in that** the first input of the XOR receives the signal from the output of the mux, and that the second input of the XOR receives this same signal delayed by the delay line, the output of the XOR controlling the mux.

**7.** Binary random source **characterized in that** it comprises at least one physical source according to one of Claims 1 to 6 and at least one digital sampler of the real variable produced by the physical source.

**8.** Binary random source according to Claim 7 **characterized in that** a sampler comprises three D type flip-flop circuits, one inverter and one exclusive-OR element.

**9.** Binary random source according to Claim 7 **characterized in that** it comprises two identical physical sources.

**10.** Binary random source according to Claim 7 **characterized in that** it comprises two different physical sources.

**Patentansprüche**

**1.** Physikalische Quelle, die es erlaubt, Zufallsvariablen zu erzeugen, **dadurch gekennzeichnet, dass** sie Blöcke enthält, die mindestens ein oder mehrere Verzögerungselemente ($N_1$, $N_2$, ...$N_k$) haben, die nicht von einem Taktgeber getaktet sind, eine Boolesche Rückschleifungsfunktion, die eine strikt affine Funktion mit einer ungeraden Anzahl von Eingängen ist, und dass das erste Verzögerungselement jedes Blocks mit einem der Eingänge der affinen Rückschleifungsfunktion verbunden ist.

**2.** Physikalische Quelle nach Anspruch 1, **dadurch gekennzeichnet, dass** die Verzögerungselemente logische "UND" sind.

**3.** Physikalische Quelle nach einem der Ansprüche 1 bis 2, **dadurch gekennzeichnet, dass** sie mindestens ein Filter (F) aufweist, das vor den Verzögerungselementen (Ni) angeordnet ist.

**4.** Physikalische Quelle nach Anspruch 3, **dadurch gekennzeichnet, dass** sie ein digitales Tiefpassfilter (Fpb) aufweist, das vor dem ersten Verzögerungselement angeordnet ist, wobei das Filter einen MUX (M) aufweist, der von einem Detektor (C) des Zustandswechsels des Signals gesteuert wird, wobei sich dieses Filter zwischen dem Ausgang der Rückschleifungsfunktion und dem Eingang der Verzögerungsleitung befindet.

**5.** Physikalische Quelle nach Anspruch 4, **dadurch gekennzeichnet, dass** der Zustandswechseldetektor des Signals ein "XOR" enthält.

**6.** Physikalische Quelle nach Anspruch 5, **dadurch gekennzeichnet, dass** der erste Eingang des "XOR" das Signal empfängt, das aus dem Ausgang des MUX stammt, und dass der zweite Eingang des "XOR" dieses gleiche Signal von der Verzögerungsleitung verzögert empfängt, wobei der Ausgang des "XOR" den MUX steuert.

**7.** Binäre Zufallsquelle, **dadurch gekennzeichnet, dass** sie mindestens eine physikalische Quelle nach einem der Ansprüche 1 bis 6 aufweist und mindestens einen digitalen Abtaster der realen Variablen, die von der physikalischen Quelle erzeugt wird.

**8.** Binäre Zufallsquelle nach Anspruch 7, **dadurch gekennzeichnet, dass** ein Abtaster drei Flip-Flops D, einen Umkehrer und ein exklusives "ODER" aufweist.

**9.** Binäre Zufallsquelle nach Anspruch 7, **dadurch gekennzeichnet, dass** sie zwei identische physikalische Quellen aufweist.

**10.** Binäre Zufallsquelle nach Anspruch 7, **dadurch gekennzeichnet, dass** sie zwei unterschiedliche physikalische Quellen aufweist.

REGISTRE A DECALAGES

HORLOGE

FONCTION BOOLEENNE
DE
REBOUCLAGE

## Fig. 1

LIGNE D'ELEMENTS DE RETARD

$N_k$  $N_{k-1}$  $N_1$

FONCTION BOOLEENNE
DE
REBOUCLAGE

B

VARIABLE

REELLE

## Fig. 2

2001/10/02 15:14:26

| | |
|---|---|
| CH1=10mV<br>DC 10:1 | 5ns/div<br>NORM:20GS/s(REP) |

| =Filter= | =Offset= | =Record Length = | =Trigger= |
|---|---|---|---|
| Smoothing : OFF | CH1 : 0.000V | Main : 1K | Mode : AUTO |
| BW : FULL | CH2 : 0.000V | Zoom : 1K | Type : EDGE CH1 |
| | CH3 : 0.0V | | Delay : 0.0ns |
| | CH4 : 0.0V | | Hold Off : MINIMUM |

Fig. 3

VARIABLE

REELLE

Fig. 4

Fig. 5

Fig. 6

Fig. 7

VARIABLE
REELLE

VARIABLE
BINAIRE

HORLOGE

D

## Fig. 8

D₁

VARIABLE
REELLE

VARIABLE
BINAIRE

XOR

D₂      I      D₃

## Fig. 9

D₁

VARIABLE
REELLE

VARIABLE
BINAIRE

XOR

I      D₂      D₃

## Fig. 10

OSCILLATEUR
DYNAMIQUE

S₁

O₁

VARIABLE
REELLE

E₁

XOR

E₂

I

ECHANTILLONNEUR

VARIABLE
BINAIRE

HORLOGE      D

OSCILLATEUR
DYNAMIQUE

S₂

O₂

VARIABLE
REELLE

INVERSEUR

## Fig. 11

Fig. 12

Fig. 13